# EUROPEAN PATENT APPLICATION

(11) **EP 4 534 962 A1**
(43) Date of publication of application: **09.04.2025**
(21) Application number: 23811844.2
(22) Date of filing: 24.05.2023
(51) Int. Cl.: G01H 9/00, G01B 11/00, G01B 11/16

(54) **VIBRATION MEASUREMENT DEVICE, VIBRATION MEASUREMENT METHOD, AND PROGRAM**

(30) Priority: 26.05.2022 JP 2022086465
(71) Applicant: Kozo Keikaku Engineering Inc., Tokyo 164-0012 (JP); National Institute of Technology, Hachioji-shi, Tokyo 193-0834 (JP)
(72) Inventor: WATAHIKI Soma, Tokyo 164-0012 (JP); KATO Yuki, Toyota-gun, Hiroshima 725-0231 (JP)
(74) Representative: Hasegawa, Kan
(86) International application number: PCT/JP2023/019316
(87) International publication number: WO 2023/228972

(57) **Abstract**

A vibration measurement apparatus, a vibration measurement method, and a program based on compressed sensing and image analysis are provided. A vibration measurement apparatus 1 includes: a light receiving device 10 configured to expose a light receiving element multiple times and acquire an optical physical quantity related to a vibrating object for each exposure; a light source 20 configured to emit light once at a random timing within an exposure time for each exposure; and a control device 40. The control device 40 includes: an analysis processing part 402 configured to calculate a physical quantity related to a vibration of the object based on the optical physical quantity; and a compressed sensing processing part 403 configured to reconstruct a vibration behavior of the object by executing compressed sensing based on a timing of emissions of the light and the physical quantity related to the vibration of the object.

## Description

### TECHNICAL FIELD

The present invention relates to a vibration measurement apparatus, a vibration measurement method, and a program, and in particular, to a vibration measurement technique using compressed sensing and image analysis.

### BACKGROUND ART

Vibration behavior of a structure is important information for examining the condition and characteristics of the structure. For this reason, measurement of the structure is carried out in a wide range of fields and situations, from its design and development to its maintenance and management.

Acceleration sensors directly attached to the surface of the structure have generally been used to measure the vibration behavior. However, acceleration sensors have limitations in attachment locations and can only obtain local information at the attached locations, which makes it difficult to grasp the behavior of the entire structure. When multiple sensors are attached, there are problems in terms of costs and operation such as increased expenses for sensors and loggers, difficulty in power management, and the like. Additionally, when the structure to be measured is lightweight, there is also a problem that the vibration behavior of the structure is changed by attaching the sensors.

In recent years, techniques have been proposed to measure deformation of the structure by analyzing images captured by cameras (refer to see Patent Document 1 and Non-Patent Document 1). Measurement of the deformation using images enables two-dimensional analysis of a wide area within the image, which makes intuitive understanding and mechanical interpretation easy. Since the measurement is non-contact, it is possible to measure without affecting the vibration of the structure itself. Furthermore, the measurement can capture spatial information (modes) of the vibration, which enables the detection of abnormal condition of the structure based on changes in the modes.

### PRIOR ART DOCUMENTS

### Non-patent documents

Patent Document 1: Japanese Unexamined Patent Application Publication No. 2020-201146
Non-Patent Document 1: "Data assimilation of Elastoplastic Finite Element Analysis Based on the Ensemble Kalman Filter", Satoshi Nakano et al., Proceedings of the 31st Computational Mechanics Conference (CMD2018), No. 18-8, The Japan Society of Mechanical Engineers, November 23, 2018
Non-Patent Document 2: Kazufumi Mimura, "Compressed Sensing - Sparse recovery and its algorithms - ", [online], July 2012, [retrieved on September 1, 2021], Internet (https://www.kurims.kyoto-u.ac.jp/~kyodo/kokyuroku/contents/pdf/1803-03.pdf)
Non-Patent Document 3: "Coded Strobing Photography: Compressive Sensing of High Speed Periodic Videos.", Veeraraghavan et al., IEEE Transactions on Pattern Analysis and Machine Intelligence, April 8, 2010, Volume 33, Issue 4, pp. 671-686

### SUMMARY OF THE INVENTION

### Problem to be Solved by the Invention

It is said that sampling must be done at twice vibration frequency (Nyquist frequency) to measure vibration (sampling theorem). For this reason, it requires a high-speed camera to apply conventional image-based deformation measurement techniques to the measurement of high-speed vibration behavior. However, there is a problem that the adoption of the high-speed camera requires extremely high costs, and long computation times and enormous storage capacity to analyze vast amounts of image data. Moreover, high-speed cameras often have low resolution and can only measure a small area or fail to capture small vibrations.

The present invention has been made to solve these problems, and aims to provide a vibration measurement apparatus, a vibration measurement method, and a program based on compressed sensing and image analysis.

### Means for Solving the Problem

One aspect of the present invention provides a vibration measurement apparatus comprising: a light receiving device having a light receiving element, the light receiving device being configured to expose the light receiving element multiple times and acquire an optical physical quantity related to a vibrating object for each exposure; a light source configured to emit light once at a random timing within an exposure time for each exposure; and a control device. The control device includes: an analysis processing part configured to calculate a physical quantity related to a vibration of the object based on the optical physical quantity; and a compressed sensing processing part configured to reconstruct a vibration behavior of the object by executing compressed sensing based on a timing of emissions of the light and the physical quantity related to the vibration of the object.

Another aspect of the present invention provides a vibration measurement apparatus comprising: a light receiving device having a light receiving element, the light receiving device being configured to repeat, multiple times, a process of exposing the light receiving element once at a random timing within a predetermined time and acquiring an optical physical quantity related to a vibrating object; and a control device. The control device includes: an analysis processing part configured to calculate a physical quantity related to a vibration of the object based on the optical physical quantity; and a compressed sensing processing part configured to reconstruct a vibration behavior of the object by executing compressed sensing based on a timing of exposures of the light receiving element and the physical quantity related to the vibration of the object.

Another aspect of the present invention provides a vibration measurement method comprising: a light receiving step of exposing a light receiving element multiple times and acquiring an optical physical quantity related to a vibrating object for each exposure; a light emitting step of causing a light source to emit light once at a random timing within an exposure time for each exposure; and an analysis processing step of calculating a physical quantity related to a vibration of the object based on the optical physical quantity; and a compressed sensing processing step of reconstructing a vibration behavior of the object by executing compressed sensing based on a timing of emissions of the light and the physical quantity related to the vibration of the object.

Another aspect of the present invention provides a vibration measurement method comprising: a light emitting step of causing a light source to emit light multiple times; a light receiving step of exposing a light receiving element once at a random timing within an emission time for each emission and acquiring an optical physical quantity related to a vibrating object; an analysis processing step of calculating a physical quantity related to a vibration of the object based on the optical physical quantity; and a compressed sensing processing step of reconstructing a vibration behavior of the object by executing compressed sensing based on a timing of exposures of the light receiving element and the physical quantity related to the vibration of the object.

Another aspect of the present invention provides a program causes a computer to execute: a step of generating a first control signal for exposing a light receiving element multiple times and acquiring an optical physical quantity related to a vibrating object for each exposure; a step of generating a second control signal for causing a light source to emit light once at a random timing within an exposure time for each exposure; an analysis processing step of calculating a physical quantity related to a vibration of the object based on the optical physical quantity; and a compressed sensing processing step of reconstructing a vibration behavior of the object by executing compressed sensing based on a timing of emissions of the light and the physical quantity related to the vibration of the object.

Another aspect of the present invention provides a program causes a computer to execute: a step of generating a first control signal for causing a light source to emit light multiple times; a step of generating a second control signal for exposing a light receiving element once at a random timing within an emission time for each emission and acquiring an optical physical quantity related to a vibrating object; an analysis processing step of calculating a physical quantity related to a vibration of the object based on the optical physical quantity; and a compressed sensing processing step of reconstructing a vibration behavior of the object by executing compressed sensing based on a timing of exposures of the light receiving element and the physical quantity related to the vibration of the object.

### Effect of the Invention

The present invention can provide a vibration measurement apparatus, a vibration measurement method, and a program based on compressed sensing and image analysis.

### BRIEF DESCRIPTION OF DRAWINGS

Fig. 1 is a block diagram illustrating a hardware configuration of a vibration measurement apparatus 1.
Fig. 2 is a block diagram illustrating a functional configuration of a control device 40.
Fig. 3 is a diagram illustrating a method for applying compressed sensing to vibration measurement.
Fig. 4 is a diagram illustrating the method for applying compressed sensing to vibration measurement.
Fig. 5 is a flowchart illustrating a vibration measurement method for a structure using the vibration measurement apparatus 1.
Fig. 6 is a diagram illustrating the method for applying compressed sensing to vibration measurement.
Fig. 7 is a diagram illustrating a content and a result of a demonstration experiment.

### MODES FOR CARRYING OUT THE INVENTION

### <Overview>

First, characteristics of the data science technique called compressed sensing that the present invention adopts will be briefly described. Compressed sensing (also known as compressive sampling) is a framework for reconstructing high-dimensional signals from sparse observations (refer to Non-Patent Document 2). In the present invention, the aforementioned problems are solved by focusing on compression sensing that has been widely used in acceleration of MRI as a medical device and astronomy, and applying compression sensing to vibration measurement using image analysis.

According to compressed sensing, it is possible to estimate (reconstruct) extensive and detailed information from a very small amount of observational data. While compressed sensing can theoretically be applied to both space and time directions, there are many application examples aimed to reconstruct spatial information. One of the reasons for this is considered to be that expensive equipment such as high-speed cameras is required as described above to exhibit high performance in the time direction.

This is due to the need for measurement technique called random sampling for the application of compressed sensing. The random sampling literally means measuring irregularly, and in the case of reconstructing information in the time direction, it is necessary to measure at irregular timing. In this case, the fineness of the information that can be reconstructed by compressed sensing (the height of the vibration frequency that can be reconstructed) is determined by the shortness of the adjustment time of the time interval (time resolution), and vibrations shorter than this time resolution cannot be reconstructed. The upper limit of the measurement interval (photographing speed) that can be set in general cameras or measuring instruments has been insufficient for reconstructing high-speed phenomena using compressed sensing, and it has been considered that very expensive equipment such as high-speed cameras are indispensable.

In one embodiment of the present invention, by combining a strobe light source with a short emission time, and a signal generation device and a control program for controlling the light emitting timing, it became possible to reconstruct extremely high-speed vibration phenomena, several hundred times faster than the camera's photographing speed, using very inexpensive equipment.

Furthermore, in the embodiment of the present invention, by applying compressed sensing to the space direction using the information reconstructed in the time direction, it became possible to reconstruct spatial vibration behavior (vibration mode) from very sparse measurement points.

The applicants succeeded in reconstructing a frequency of a phenomenon vibrating at 3210 times per second (vibration behavior at a certain measurement point) and a spatial vibration shape (change behavior of a structure's shape) in a verification experiment using a camera with a general photographing speed of 10 frames per second. In addition, the applicants succeeded in individually decomposing and reconstructing all frequencies and spatial vibration shapes even when a waveform synthesized from 10 types of vibrations with different amplitudes in the range of 90 to 160 times per second was input to the structure instead of a waveform with a single frequency.

Specific embodiments according to the present invention will be described in detail with reference to the drawings.

### <Embodiment 1>

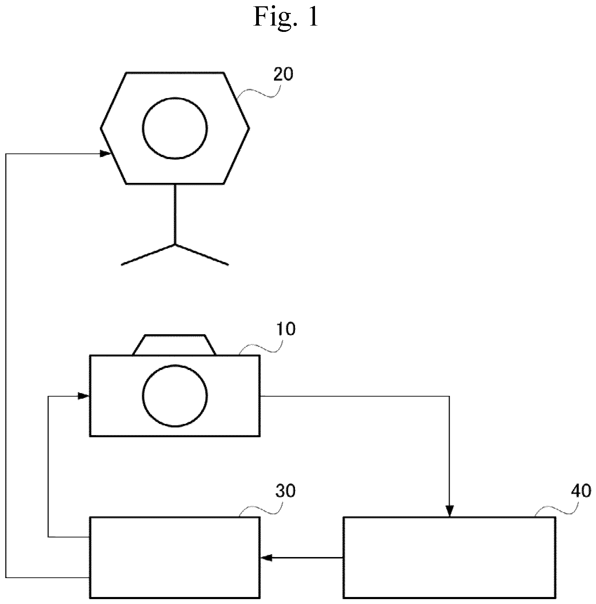

Fig. 1 is a block diagram illustrating a hardware configuration of a vibration measurement apparatus 1 according to Embodiment 1 of the present invention. The vibration measurement apparatus 1 includes a light receiving device 10, a light source 20, a signal generation device 30, and a control device 40.

The light receiving device 10 is typically a camera configured to capture visible light emitted from an object and form a visible image. Alternatively, the light receiving device 10 may be an infrared camera or an ultraviolet camera sensitive to invisible light, a laser displacement meter configured to measure the shape or displacement of the object, or the like. In other words, the light receiving device 10 is a device capable of measuring an optical physical quantity related to the object by an optical means (light receiving element). Hereinafter, for simplicity of explanation, a process of measuring the physical quantity by the light receiving device 10 is referred to as "photographing", and a measured data is referred to as "image."

The light receiving device 10 may perform photographing at a timing when a control signal is input from the outside. In other words, the light receiving device 10 may start exposure at the input timing of the control signal, end the exposure after a predetermined exposure time has elapsed, and perform processing such as transfer and storage of the photographed data. Alternatively, the light receiving device 10 may start photographing at the timing when the control signal is input from the outside, and repeat photographing at predetermined intervals. In other words, the light receiving device 10 may start the exposure at the input timing of the control signal, end the exposure after the predetermined exposure time has elapsed, and perform processing such as the transfer and the storage of the photographed data. After a predetermined time has elapsed since the previous exposure, the light receiving device 10 may perform a series of processes such as the exposure, and the transfer and the storage of the photographed data again. The control signal may be output by a controller such as a release, or may be an electric signal such as a pulse wave train output by the signal generation device 30. In this case, by recording the signal output time of the control signal, the photographing time of the image can be identified.

The light source 20 is typically a strobe. Alternatively, the light source 20 may be a laser oscillator or the like. In other words, the light source 20 is a device configured to generate light necessary for the light receiving device 10 to perform photographing.

The light source 20 emits light at a designated timing in response to a control signal input from the outside. In other words, the light source 20 starts emission at the input timing of the control signal and ends the emission after a predetermined emission time has elapsed. The control signal is, for example, an electric signal such as a pulse wave train output by the signal generation device 30. In this case, by recording the signal output time of the control signal, the emission time of the light source 20 can be identified. In Embodiment 1, it is desirable that the light source 20 has a short emission time, a short emission interval (preparation time required from one emission to the next), and a large light quantity. As the light emission time and the light emission interval of the light source 20 become shorter, the vibration measurement apparatus 1 can reconstruct the phenomenon of the higher vibration frequency.

The signal generation device 30 is a device configured to generate and output electrical control signals at preset timing to control photographing timing of the light receiving device 10 and light emitting timing of the light source 20. As the time resolution of this process is higher, that is, as the output timing of the control signal can be adjusted more finely, the vibration measurement apparatus 1 can reconstruct the phenomenon of the higher vibration frequency. The time resolution is determined depending on an internal clock or the like of the signal generation device 30. The signal generation device 30 can be configured by using, for example, a dedicated device such as a function generator, or a general-purpose device such as a microcomputer or an FPGA (Field Programmable Gate Array). The signal waveform output by the signal generation device 30 may be changed according to specifications of the light receiving device 10 and the light source 20, but generally, a pulse train is used.

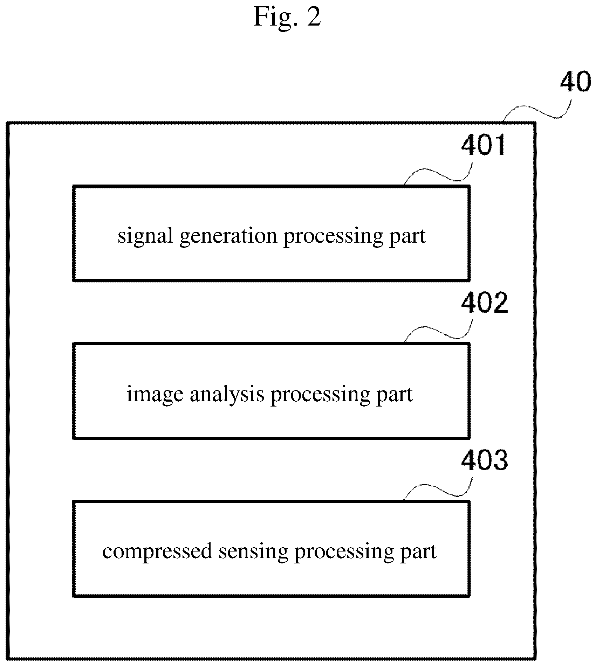

The control device 40 is typically a personal computer or a microcomputer, and realizes predetermined functional elements, that is, processing parts, by a processor reading and executing programs stored in a memory. Fig. 2 is a block diagram illustrating a functional configuration of the control device 40. The control device 40 includes a signal generation processing part 401, an analysis processing part 402, and a compressed sensing processing part 403.

The signal generation processing part 401 is configured to perform processing to set the output timing of the control signals for the signal generation device 30. The output timing of the control signals is calculated according to the exposure time (shutter speed) and the photographing speed (the number of shots possible per unit time, determined by the exposure time + data transfer time, etc.) of the light receiving unit 10, the minimum emission interval and emission time of the light source 20, and the like. The exposure time by the light receiving device 10 can be set as long as possible within a settable range, for example. The photographing timing of the light receiving device 10 may be at regular intervals or irregular intervals. In the present embodiment, the light emitting timing of the light source 20 is set to once within each exposure time of the light receiving device 10. The light emitting timing is determined according to arbitrary probability distribution such as a uniform random number or a normal distribution random number, depending on the time resolution of the signal generation device 30. That is, the light source 20 is set to emit light only once at the random timing during each exposure by the light receiving device 10, and not to emit light during the data transfer time and the like after the exposure. The signal generation processing part 401 can save the calculated setting values for the output timing of the control signals in an unillustrated storage area. The setting values for the output timing of the control signals can be used repeatedly, and there is no need to recalculate for each measurement under the same light receiving device 10 and light source 20 and photographing conditions. The calculated setting values for the output timing of the control signals are also used in the compressed sensing processing part 403 described later.

The analysis processing part 402 is configured to acquire randomly sampled image data, that is, a series of image data captured by the light receiving device 10 under the control of the vibration measurement apparatus 1. Then, the analysis processing part 402 is configured to calculate local physical quantities related to the vibration of the object, such as displacement and deformation, from each acquired image. For this analysis, known techniques such as Digital Image Correlation (DIC) or sampling moire method can be used.

The compressed sensing processing part 403 is configured to execute compressed sensing by using time series data of the physical quantities calculated by the analysis processing part 402 and the setting values for the output timing of the control signals generated by the signal generation processing part 401.

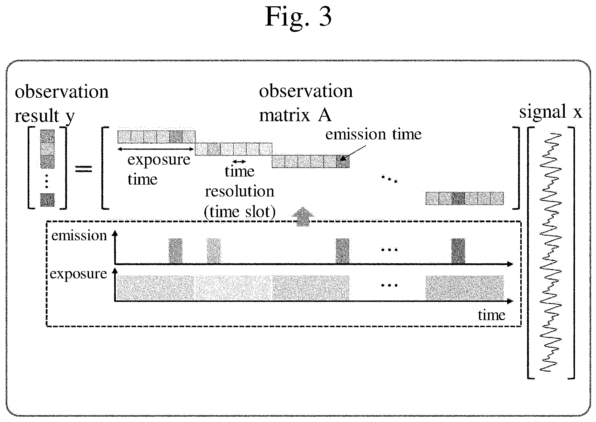

Fig. 3 is a diagram illustrating a specific method for applying compressed sensing to vibration measurement.

Compressed sensing is a technique for estimating an unknown vector x based on linear observation. Even if the signal x cannot be directly observed, if a result y of multiplying the signal x by an observation matrix A can be observed (linear observation), it is possible to estimate x by using the observation result y and the observation matrix A (reconstruction). The detailed procedure for the reconstruction is omitted in the present specification (refer to Non-Patent Document 2).

In the present embodiment, the unknown vector x is a waveform representing the vibration (change of the physical quantity such as displacement and deformation with time passage) of the object.

The observation matrix A may be a matrix representing the timing of the observation, that is, the timing at which the object is photographed. For example, assuming that each of the exposure time is divided into time slots by the time resolution to generate a bit string having a bit "1" corresponding to one time slot where the light source 20 emitted light and bits "0" corresponding to the other time slots where the light source 20 did not emit light, the bit string can be used as elements of the matrix. As a specific example, assuming that the exposure time is 0.6 seconds, the time resolution is 0.1 seconds (the light emitting timing of the light source 20 can be controlled at 0.1 second intervals), and the light emitting timing is 0.4 seconds after the start of the exposure, the bit string becomes 000010. Performing photographing M times causes M bit strings. By arranging these M bit strings over M rows as shown in Fig. 3, the observation matrix A can be generated.

For the observation result y, the local physical quantities such as displacement and deformation can be used, the local physical quantities being calculated by the analysis processing part 402 based on the photographed images. Performing photographing M times causes M physical quantities, and the observation result y can be generated by arranging M physical quantities M rows as shown in Fig. 3.

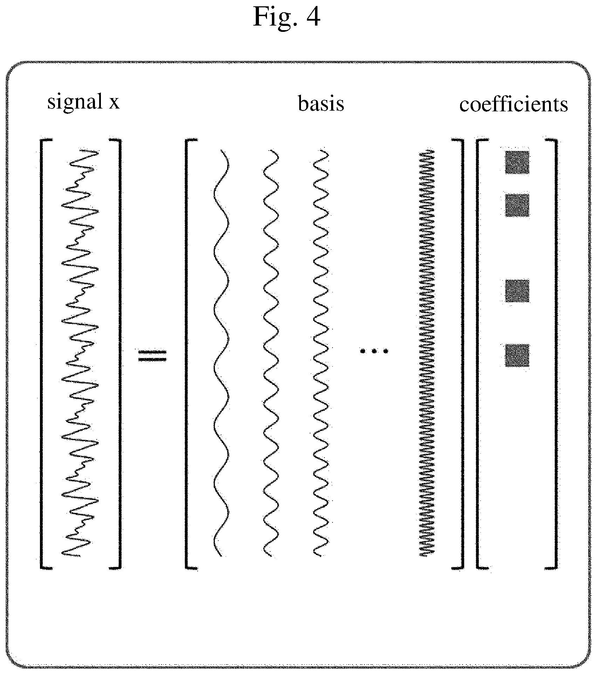

As shown in Fig. 4, when compressed sensing is applied to reconstruction, it is necessary to set a basis, that is, reference elements that compose the vibrations (refer to Non-Patent Document 2). For the basis, bases commonly used in signal decomposition, such as discrete Fourier basis, continuous wavelet basis, discrete wavelet basis, etc., can be used.

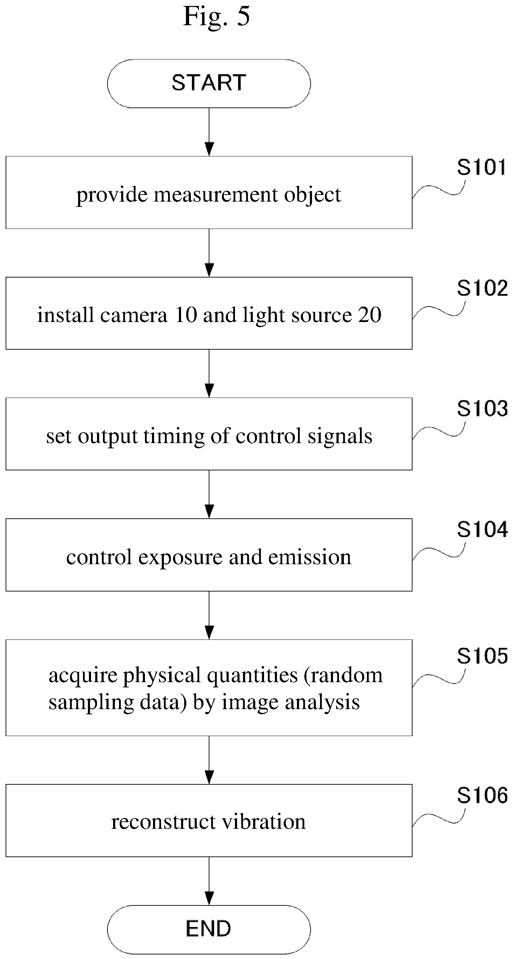

Next, a vibration measurement method for the structure using the vibration measurement apparatus 1 will be described according to a flowchart illustrated in Fig. 5.

### S101:

A pattern for image analysis is provided on a surface of a measurement object. For example, the pattern is applied on the object's surface, or a seal or the like is attached to the object's surface. The shape of the pattern is arbitrary, and for example, a circular shape, a geometric pattern such as AR marker, a random pattern, a regular or irregular grid pattern, or the like can be used. A natural pattern, a stain, or the like formed on the surface of the object may be used as the pattern.

The pattern made of retroreflective material can prevent influence of environmental light (e.g., illumination light) and enable stable measurement. Retroreflective material reflects light from a light source along approximately the same optical path as that of the incident light. By placing the light source 20 near the light receiving device 10, the influence of environmental light and the like other than light from the light source 20 can be prevented during photographing by the light receiving device 10, and stable measurement can be performed.

### S102:

The light receiving device 10 is installed so that the entire measurement range fits within the image, and the position of the light source 20, the light quantity thereof, and the aperture of the lens thereof are adjusted so that the image analysis pattern is captured only when the light source 20 emits light.

### S103:

The signal generation processing part 401 of the control device 40 calculates the setting values for the output timing of the control signals, and sets the setting values in the signal generation device 30. That is, the signal generation processing part 401 writes the setting values to the unillustrated storage area of the signal generation device 30.

The signal generation processing part 401 may calculate the setting values for the output timing of the control signals each time, or if there has been experience or the like of measuring under the same conditions in the past, the signal generation processing part 401 may reuse the setting values that were calculated and saved in the past.

### S104:

The signal generation device 30 is connected to external control terminals of the light receiving device 10 and the light source 20. The signal generation device 30 outputs the control signals to the light receiving device 10 and the light source 20 according to the setting values for the output timing of the control signals. This allows the light receiving device 10 and the light source 20 to record a state of the object vibrating at the timing calculated in advance by the signal generation processing part 401.

### S105:

The analysis processing part 402 analyzes the images acquired by the light receiving device 10, and acquires the time series data (random sampling data) of the physical quantities.

### S106:

Based on the random sampling data of the physical quantities obtained in step S105 and the setting values for the output timing of the control signals generated by the signal generation processing part 401, the compressed sensing processing part 403 obtains a reconstruction result by decomposing the spatial mode and the frequency and reconstructing the vibration with much higher frequency than that of the photographing interval of the light receiving device 10.

### <Embodiment 2>

In Embodiment 1, the light source 20 emitted light only once at the random timing during each of the exposure by the light receiving device 10. In contrast, Embodiment 2 is characterized by the light receiving device 10 exposing the light receiving element only once at a random timing during each of the emission by the light source 20. The vibration measurement apparatus 1 according to Embodiment 2 will be described focusing on differences from Embodiment 1 as follows. Description of configurations, operations, and the like common to Embodiment 1 will be omitted as appropriate.

The hardware configuration of the vibration measurement apparatus 1 according to Embodiment 2 is as shown in Fig. 1.

In Embodiment 2, it is desirable that the light receiving device 10 has a short exposure time (shutter speed), a fast photographing speed (the number of shots possible per unit time, determined by the exposure time + the data transfer time, etc.), and a high sensitivity. As the exposure time by the light receiving device 10 is shorter and the photographing speed by the light receiving device 10 is faster, the vibration measurement apparatus 1 can reconstruct the phenomenon of the higher vibration frequency.

In Embodiment 2, the emission time by the light source 20 can be set as long as possible within a settable range, for example. The light emitting timing of the light source 20 may be at regular intervals or irregular intervals.

The exposure timing by the light receiving device 10 is set to once within each emission time of the light source. The exposure timing is determined according to arbitrary probability distribution such as a uniform random number or a normal distribution random number, depending on the time resolution of the signal generation device 30. That is, the light receiving device 10 exposes the light receiving element only once at the random timing during each emission by the light source 20.

The time gap between each emission by the light source 20 can be 0 or more. When the time gap is greater than 0, the light source 20 emits light intermittently. In other words, the light source 20 blinks. For example, assuming that each of the emission time is 0.6 seconds and the time gap between the emissions is 0.1 seconds, the light source 20 blinks by alternately repeating the light emission (0.6 seconds) and no light emission (0.1 seconds). In contrast, when the time gap is 0, the light source 20 emits continuous light, and for example, sunlight can be used as the light source 20. For instance, assuming that each of the emission time is 0.6 seconds and the time gap between the emissions is 0, although the light source 20 objectively becomes continuous light, the vibration measurement apparatus 1 performs processing by assuming that the light source 20 repeats light emission for 0.6 seconds with a time gap of 0.

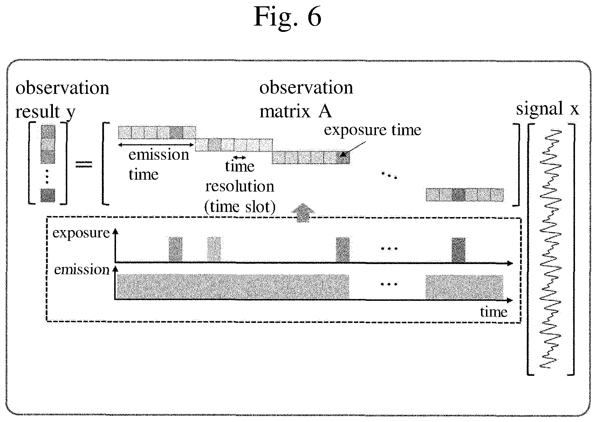

Fig. 6 is a diagram illustrating a specific method for applying compressed sensing to vibration measurement in Embodiment 2.

In the present embodiment as well, the observation matrix A may be the matrix representing the timing of the observation, that is, the timing at which the object is photographed. For example, assuming that each of the emission time is divided into time slots by the time resolution to generate a bit string having a bit "1" corresponding to one time slot where the light receiving device 10 exposed the light receiving element and bits "0" corresponding to the other time slots where the light receiving device 10 did not expose the light receiving element, the bit string can be used as elements of the matrix. As a specific example, assuming that the emission time is 0.6 seconds, the time resolution is 0.1 seconds (the exposure timing by the light receiving device 10 can be controlled at 0.1 second intervals), and the exposure timing is 0.4 seconds after the start of the light emission, the bit string becomes 000010. Performing photographing M times causes M bit strings. By arranging these M bit strings over M rows as shown in Fig. 3, the observation matrix A can be generated.

The unknown vector x and the observation result y can be generated in the same manner as in Embodiment 1.

The vibration measurement method for the structures using the vibration measurement apparatus 1 according to Embodiment 2 is as shown in Fig. 5.

### <Demonstration Experiment>

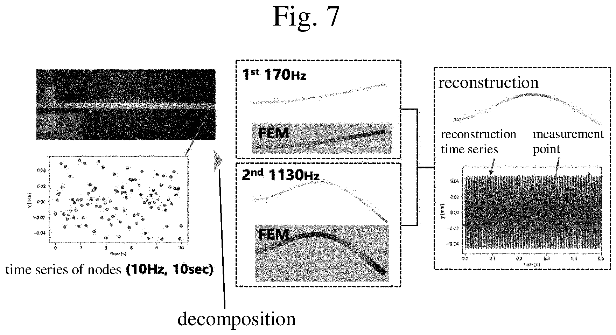

The applicants conducted a vibration measurement experiment using the vibration measurement apparatus 1 having the configuration of Embodiment 1 according to the present invention. The contents and results are shown in Fig. 7 and below.

Contents: Using a vibration table, a synthesized vibration of 170 Hz and 1130 Hz was input to a center of an aluminum alloy flat plate. The plate in this state was photographed using the light receiving device 10 having a photographing speed of 10 Hz (10 fps, that is, 10 frames per second). During each of the exposure by the light receiving device 10, the light source 20 was caused to emit light once at a random timing.

Results: The compressed sensing processing part 403 decomposed the synthesized vibration into modes and extracted the modes of 170 Hz and 1130 Hz. This corresponds to 226 times the Nyquist frequency. This proves that the vibration measurement apparatus 1 can decompose a waveform having the Nyquist frequency or more into modes. Moreover, the waveform of the decomposed modes of 170 Hz and 1130 Hz was approximately the same as a waveform obtained by finite element method (FEM) analysis. This proves the accuracy of the measurement results by the vibration measurement apparatus 1.

In another experiment, a mode of 3210 Hz (642 times the Nyquist frequency) was identified by using a camera having the photographing speed of 10 Hz, and decomposition into 10 frequencies was possible. In addition, it was confirmed that steady, random, and damped structural vibrations could be handed.

While the embodiments of the present invention have been described above, the present invention is not limited to the above-described embodiments, and can be appropriately modified within the scope of the present invention. Within the scope of the present invention, any component of the embodiments can be modified, or any component of the embodiments can be omitted.

Furthermore, the information processing according to the present invention may be realized by hardware, or may be realized by a CPU executing a computer program. The computer program may be provided to the computer by various types of non-transitory computer readable media or transitory computer readable media.

### Description of Reference Numerals

1 Vibration measurement apparatus
10 Light receiving device
20 Light source
30 Signal generation device
40 Control device
401 Signal generation processing part
402 Analysis processing part
403 Compressed sensing processing part

## Claims

1. A vibration measurement apparatus comprising:
a light receiving device having a light receiving element, the light receiving device being configured to expose the light receiving element multiple times and acquire an optical physical quantity related to a vibrating object for each exposure;
a light source configured to emit light once at a random timing within an exposure time for each exposure; and
a control device, wherein
the control device includes:
an analysis processing part configured to calculate a physical quantity related to a vibration of the object based on the optical physical quantity; and
a compressed sensing processing part configured to reconstruct a vibration behavior of the object by executing compressed sensing based on a timing of emissions of the light and the physical quantity related to the vibration of the object.

2. A vibration measurement apparatus comprising:
a light receiving device having a light receiving element, the light receiving device being configured to repeat, multiple times, a process of exposing the light receiving element once at a random timing within a predetermined time and acquiring an optical physical quantity related to a vibrating object; and
a control device, wherein
the control device includes:
an analysis processing part configured to calculate a physical quantity related to a vibration of the object based on the optical physical quantity; and
a compressed sensing processing part configured to reconstruct a vibration behavior of the object by executing compressed sensing based on a timing of exposures of the light receiving element and the physical quantity related to the vibration of the object.

3. A vibration measurement method comprising:
a light receiving step of exposing a light receiving element multiple times and acquiring an optical physical quantity related to a vibrating object for each exposure;
a light emitting step of causing a light source to emit light once at a random timing within an exposure time for each exposure; and
an analysis processing step of calculating a physical quantity related to a vibration of the object based on the optical physical quantity; and
a compressed sensing processing step of reconstructing a vibration behavior of the object by executing compressed sensing based on a timing of emissions of the light and the physical quantity related to the vibration of the object.

4. A vibration measurement method comprising:
a light emitting step of causing a light source to emit light multiple times;
a light receiving step of exposing a light receiving element once at a random timing within an emission time for each emission and acquiring an optical physical quantity related to a vibrating object;
an analysis processing step of calculating a physical quantity related to a vibration of the object based on the optical physical quantity; and
a compressed sensing processing step of reconstructing a vibration behavior of the object by executing compressed sensing based on a timing of exposures of the light receiving element and the physical quantity related to the vibration of the object.

5. A program for causing a computer to execute:
a step of generating a first control signal for exposing a light receiving element multiple times and acquiring an optical physical quantity related to a vibrating object for each exposure;
a step of generating a second control signal for causing a light source to emit light once at a random timing within an exposure time for each exposure;
an analysis processing step of calculating a physical quantity related to a vibration of the object based on the optical physical quantity; and
a compressed sensing processing step of reconstructing a vibration behavior of the object by executing compressed sensing based on a timing of emissions of the light and the physical quantity related to the vibration of the object.

6. A program for causing a computer to execute:
a step of generating a first control signal for causing a light source to emit light multiple times;
a step of generating a second control signal for exposing a light receiving element once at a random timing within an emission time for each emission and acquiring an optical physical quantity related to a vibrating object;
an analysis processing step of calculating a physical quantity related to a vibration of the object based on the optical physical quantity; and
a compressed sensing processing step of reconstructing a vibration behavior of the object by executing compressed sensing based on a timing of exposures of the light receiving element and the physical quantity related to the vibration of the object.
